# EUROPÄISCHE PATENTANMELDUNG

(11) **EP 2 282 105 A2**
(43) Veröffentlichungstag der Anmeldung: **09.02.2011**
(21) Anmeldenummer: 10008118.1
(22) Anmeldetag: 04.08.2010
(51) Int. Cl.: F16N 29/02, F16H 57/04

(54) **Verfahren zur belastungsorientierten Schmierung von tribologischen Systemen**

(30) Priorität: 05.08.2009 DE 102009036228
(71) Anmelder: Mehnert, Jens, 08468 Heinsdorfergrund (DE)
(72) Erfinder: Mehnert, Jens, 08468 Heinsdorfergrund (DE)
(74) Vertreter: Findeisen Hübner Neumann

(57) **Zusammenfassung**

Die Erfindung betrifft ein Verfahren zur belastungsorientierten Schmierung on tribologischen Systemen **dadurch gekennzeichnet, dass** die geometrischen Gegebenheiten des tribologischen Systems ermittelt werden, die Geschwindigkeit, die Temperatur und das dabei übertragene Moment aufgenommen und daraus Lastkollektive gebildet werden, die Verteilung dieser Lastkollektive über einen repräsentativen Zeitraum ermittelt werden und daraus ein Beiastungsäquivalent des tribologischen Systems bestimmt wird, aus diesem Belastungsäquivalent die jeweils zugehörige erforderliche Vorratsschmiermlttelmenge und/oder die Vorratsmengen für die Schmiermitteladditive und/ oder Schmiermittelkomponenten bestimmt sowie die sich daraus ergebenden Abmessungen für die jeweiligen Vorratsbehältnisse und die Abstreifeinrichtung für Schmiermittel ermittelt werden, aus den geometrischen Gegebenheiten und den gebildeten Lastkollektiven die geometrische Gestalt A und B, der Abstand S sowie die Winkel γ und δ des Schmierschnorchelkopfes bestimmt werden, die lastkollektivabhängigen Parameter für Schmiermittelzuführdruck, Intervall zur Schmierung des tribologischen Systems und zuzuführendes Schmiermittelvolumen ermittelt werden.

## Beschreibung

Die Erfindung betrifft ein Verfahren zur belastungsorientierten Schmierung von tribologischen Systemen mit der Möglichkeit zur Regeneration verbrauchten Schmiermittels, zur Bestimmung des Schmierstoffwechselzeitpunktes und des Verschleißzustandes des tribologischen Systems.

Es ist bekannt, tribologische Systeme mit Hilfe eines Schmiersystems dauerhaft durch in Vorratsbehältnissen gespeicherte Schmiermittel zu schmieren und in der Folge die erforderliche Gleitfähigkeit abzusichern. Dabei werden für die spezifischer Anwendungsfälle von tribologischen Systemen unterschiedliche Ausführungen zur Schmierung eingesetzt, welche jedoch meist durch eine kontinuierliche Schmiermittelzuführung gekennzeichnet sind, weshalb eine auf die Belastung des zu schmierenden tribologischen Systems abgestellte Schmiermittelzufuhr sowie der Abnutzungsgrad des tribologischen Systems nur unzureichend Berücksichtigung finden. Auswerteverfahren zur Ermittlung des Schmiermittelzustandes mit der Möglichkeit, diesen durch geziete Zugabe von Schmiermitteladditiven und/ oder Schmiermittelkomponenten während des Betriebes des tribologischen Systems auf einem erforderlichen Schmierniveau zu halten, sind nicht bekannt. Darüber hinaus werden einerseits die Herstellungskosten bei bekannten Verfahren und Vorrichtungen durch Einbringen von Schmierelernenten in die Systemglieder von tribologischen Systemen deutlich erhöht und andererseits die Tragfähigkeitsegenschaften negativ beeinflusst.

In DE 20 2007 004 103 U1 wird ein Schmierritzel und eine Schmiereinrichtung zum Aufbringen eines beispielsweise durch eine Schmierstoffleitung von einer Schmierstoffpumpe aus einem Vorratsbehälter geförderten Schmierstoftes, insbesondere Fett, auf wenigstens ein Zahnrad, wobei das Schmierritzel eine Außenverzahnung aufweist, in welche wenigstens ein Schmierstoffauslass mündet, beschrieben. Dabei liegt der Gedanke zugrunde, dass die Ausbildung von beispielsweise radial verlaufonden Kanälen zu den einzelnen Zähnen vereinfacht werden kann, wenn diese Kanäle aus zwei Kanalhälften zusammengesetzt sind, die miteinander verbindbar sind. Dafür werden zwei Schmierritzelteile vorgesehen, die entlang einer Teilungsebene durart miteinander verbindbar sind, dass Schmiermittelkanäle in der Teilungsebene verlauten. Die eingangs dargestellten Nachteile werden durch diese Vorrichtung nicht beseitigt.

In DE 20 2006 011 330 U1 wird eine weitere Schmiereinrichtung mit wenigstens einem Schmierritzel zum Aufbringen eines beispielsweise durch eine Schmierstoffleitung von einer Schmierstoffpumpe aus einem Vorratsbehälter geförderten Schmierstoftes, insbesondere Fett, auf wenigstens ein Zahnrad, wobei das Schmierritzel eine Außenverzahnung aufweist, in welche wenigstens ein Schmierstoffauslass mündet, beschrieben. Herbei weisen die Zähne der Außenverzahnung des Schmierritzels ein gegenüber einer Evolventenverzahnung gekürztes Zahnflankenprofil auf wobei die Kopfhöhe und/oder die Breite der Zahnflanken in Umfangsrichtung in einem radial außerhalb des Teilkreises gelegenen Zahnflankenabschnitt verringert sind. Durch diese Verringerung der Kopfhöhe dringen die Zähne des Schmierritzels weniger tief in den Fußbereich des zu schmierenden Zahnrades ein, wodurch eine erheblich bessere Verteilung des Schmiermittels in den tribologisch starker beanspruchten Bereich erreicht wird und insbesondere eine ungewollte Ansammlung des Schmiermittels im Fußbereich des zu schmierenden Zahnrades vennieden wird. Die eingangs dargestellten Nachteile werden durch diese Vorrichtung nicht beseitigt.

In DE 201 21 923 U1 wird eine automatische Schmierung de Zahnräder von Windkraftwerken beschrieben, wobei eine gleichmäßige Übertragung des Schmierfilms auf das zu schmierende Zahnrad ohne Verlust von Schmierstoffen gewährbeistet werden soll, insbesondere werden die dazu erforderlichen Teile einer automatischen Schmieranlage vorgeschlagen. Dies erfolgt durch ein speziell gestaltetes Zahnradabschnmermodul. Auch bei dieser technischen Lösung werden die eingangs beschriebenen Nachteile nicht beseitigt.

In DE 20 2008 001 286 U1 wird eine Wälzlagerschmier-vorrichtung mit einem Schmiermittelvorrat und mit einer Schmiermittelfördereinchtung beschrieben. Dabei besteht die Wälzlagerschmiervorrichtung aus einem mitdrehenden Schmiermittelförderelement, welches so gestaltet ist, dass es periodisch in Kontakt mit dem Schmiermittelvorrat gelangt, wodurch eine drehzahlabhängige Schmiermittelzufuhr realisiert wird. Aussagen bezüglich einer belastungsorientierten Schmierung mit Ausgabe der Verschleißgrade von Schmiermittel und tribologischen System werden nicht getroffen.

In EP 1 731 719 B1 werden Lageranordnungen und insbesondere die m Schmiersystem auftretende Ölkohleablagerung, die nach dem Abschalten des die Lageranordnung aufweisenden Triebwerks auftritt sowie ein Schmiersystem für ein Lager, bestehend aus einer Schmiervorrichtung, in Verbindung mit Schmierölrohren für andere Lager, wobei eine Pumpe die Schmierölströmung unter Druck setzt und der Ablaufbegrenzer zwischen dem Versorgungsrohr und anderen Rohren für andere Lager wirkt, um das Rohr von dem Ablaufschutzrohr zu trennen, beschrieben. Dadurch werden Verbesserungen bei der Schmierung von Lagerungen für Triebwerke erreicht, jedoch die eingangs beschriebenen Nachteile nicht abgestellt.

DE 2006 022 204 A1 beschreibt ein Druckmaschinenschmiersystem, dass als solches der Versorgung und der Rückführung von Schmieröl und gegebenenfalls Fett zu verschiedensten Schmierstellen innerhalb einer Druckmaschine dient. Weiterhin wird auch ein Schmierstoffbereitstellungsverfahren, das als solches der Sicherstellung einer hinreichenden Systemschmierung dient, offenbart. Gegenstand ist ein Druckmaschinenschmiersystem, bestehend aus einem Zubringungsabschnitt zur Zubringung des Schmierstoffes zu den Schmierstellen, einem Rückführungsabschnit zur Rückführung des Schmierstoffes und einem Fördersystem, zur Förderung des Schmierstoffes aus dem Rückführungsabschnitt in den Zubringungsabschnitt, wobei eine Sensoreinrichtung zur Generierung hinsichtlich des Ölzustandes Indikativer elektrischer Signale vorgesehen ist und eine elektronische Rechnereinrichtung, die derart ausgebildet ist, dass diese jene hinsichtlich des Ölzustandes indikativen Signale mit weiteren Maschinenbetriebsdaten verknüpft auswertet, wobei auf Grundlage dieser Auswertung ein Auswertungsergebnis generiert wird, das Aufschluss über das momentane Schmierleistungsvermögen oder den Verschleißzustand des Schmierstoffes gibt

In DE 600 26 599 T2 wird eine Vorrichtung zur Steuerung der Zufuhr von Schmiemittel zu gleitenden oder rollenden Kontaktflächen zwischen Maschinenkomponerten offenbart Das darin beschriebene Schmiermittelsteuersystem für ein System von Maschinenkomponenten umfasst eine Schmierfilmdicken-Messeinrichtung, eine Schmiermitteleingabeeinrichtung sowie eine Steuereinrichtung, wobei die Steuereinrichtung dazu ausgelegt ist, Signale betreffend die Dicke des Schmiermittels auf wenigstens einem Element von einer oder mehreren Maschinenkomponenten von der Schmiermittelfilmdicken-Messeinrichtung zu empfangen und dazu ausgelegt ist, die Schmiermitteleingabeeinrichtung so zu steuern, dass sie eine Schmiermittelzufuhr zu einer oder mehreren der Maschinenxomponenten des Systems basierend auf den Signalen von der Dickenmesselnrlchtung einstellt. Ferner Ist eine Kalibrierungseinrichtung vorgesehen, die dazu ausgelegt ist, den Wert wenigstens einer physikalischen Variable des Schmiermittels zu bestimmen, die für die Dickenmessung relevant ist.

DE 10 2005 057 610 A1 offenbart eine Windenergieanlage und ein Verfahren zur Durchführung mit einer Windenergieanlage, indem einem Lager, insbesondere Generatorlager, Schmierfett zugeführt wird. Darin ist die Aufgabe beschrieben, dass eine Messeinrichtung ermittelte Messwerte an eine Steuereinrichtung überträgt, weiche mit der Schmierfettzuführeinrichtung in Verbindung steht und dass die Steuereinrichtung ermittelte Steuerwerte an die Schmierfettzuführeinrichtung überträgt.

In DE 198 12 128 A1 ist eine Vorrichtung zum Regeln von Durchflussmegen wenigstens eines Arbeitsmediums, wie Öl und wenigstens eines Trägermediums, wie Luft sowie ein Verfahren zur Minimalmengen-Kühlschmierung offenbart. Es sind Mittel vorgesehen zum Bereitstellen eines Gemisches bestehend aus einem Arbeitsmedium, cas bevorzugt ein Schmleröl ist und einem Trägermedium, insbesondere Luft, wobei an einem von zwei Ausgängen das Gemisch und einem zweiten Ausgang das Trägermedium im reinen Zustand bereitstellbar sind. Dadurch kann ein Arbeitsmedium in Form eines Schaums in einer Zuführleitung der Kühlschmiervorrichtung zugeführt und in einer zweiten Leitung das reine Trägermedium zugeführt werden.

Die Aufgabe der vorliegenden Erfindung besteht in der Bereitstellung eines Verfahrens zur belastungsorientierten Schmierung von tribologischen Systemen mit der Möglichkeit einer automatisierten Anpassung der Schmierparameter an den aktuellen Zustand des tribologischen Systems sowie einer Verfahrensweise zur Regeneration verbrauchten Schmiermittels während des Betriebes und zur kontinuierlichen Überwachung ermittelter Erwartungswerte für die Lebensdauer des Schmiermittels bis zum Austausch sowie des tribologischen Systems.

Diese Aufgabe wird durch ein Verfahren gemäß den Merkmalen des Patentanspruchs 1 gelöst. Vorteilhafte Ausführungen sind Gegenstand der Unteransprüche.

In einem erfindungsgemäßen Verfahren zur belastungsorientierten Schmierung von tribologischen Systemen werden die geometrischen Gegebenheiten eines tribologischen Systems in der Art ermittelt, dass die Abmessungen, die Wirkflächen, die Lagerstellen, die Einbaulage im Gehäuse oder vergleichbare Merkmale der Systemglieder aufgenommen werden. Danach erfolgt die Ermittlung der Betriebsparameter der Systemglieder, wie Geschwindigkeit und das dabei übertragene Moment, Temperatur, Beschleunigungen, Geschwindigkeits- und Momentbereiche, Wirkrichtungen und Flächenpressungen. Auf Basis dieser ermittelten Betriebsparameter werden Lastkollektive gebildet, welche relevante Kombinationen dieser Betriebsparameter darstellen. Aus den ermittelten geometrischen Gegebenheiten und den gebildeten Lastkollektiven wird das zu schmierende Systemglied des tribologischen Systems bestimmt und auf dieser Grundlage die geometrische Gestalt, der Abstand sowie die räumliche Lage des Schmierschnorchalkopfes in Felation zu diesem Systemglied festgelegt.

Im Anschluss wird die Verteilung dieser Lastkollektive über einen repräsentativen Nutzungszeitraum des tribologischen Systems ermittelt. Daraus erfolgt die Bestimmung eines Wertes für das Belastungsäquivalent des betrachteten tribologischen Systems. Dieser Wert für das Belastungsäquivalent dient anschließend zur Ermittlung günstiger Größenordnungen für den erforderlichen Vorrat an frischem Schmiermittel und/oder die Vorratsmengen für die Schmiermitteladditive und/oder Schmiermittelkomponenten. Nach Festlegung dieser erforderlichen Vorratsmengen werden die Abmessungen für die jeweiligen Vorratsbehältnisse und die Gestalt der Abstreifeinrichtung für außerhalb der Wirkflächen des tribologischen Systems befindlichen Schmiermittels, bestimmt.

Im Anschluss erfolgt auf der Grundlage des ermittelten Wertes für das Beastungsäquivalent durch die zentrale Überwachungseinheit die Bereitstellung
- lastkollektivabhängiger Schmierparameter wie Schmiermittelzuführdruck, Intervall zur Schmierung des tribologischen Systems, zuzuführendes Schmiermittelholumen und/oder Temperatur des zuzuführenden Schmiermittels,
- betriebsdauerabhängige Erwartungswerte für den Verscheißzustand des Schmiermlttels und der zugehörigen Restbetrlabsdauer des tribologischen Systems,
- Vorgabewerte für die jeweils erforderlichen Mengenzuführungen an Schmiermitteladditiven und/oder Schmiermittelkomponenten in Abhängigbeit der Einfärbung und/ oder Konsistenz und/oder unter Beachtung der Temperatur des verbrauchten Schmiermittels,
- Maximalwerte der Überwachungsparameter wie Wirkflächentemperatur und/oder Wirkflächengeräusch und/oder Schwingungsformen und/oder Leistungsdifferenz zwischen Energleeintrag und Energleaustrag sowie
- Schwellwerte für minimale und maximale Schmierfilmdicke für die überwachte Wirkstelle.

Vor Erstinbetriebnahme eines insbesondere mit Fettschmierung betriebenen tribologischen Systems ist es vorteilhaft, eine Grundmenge an frischem Schmiermittel auf die Wirkfläche oder die Wirkflächen aufzubringen. Diese Grundmenge nimmt den zu erwartenden erhöhten Einlaufabrieb eines tribologischen Systems auf. Im durchzuführenden Einlaufbetrieb werden auf der Grundlage des ermittelten Belastungsäquivalents relevante Betriebsparameter gewählt und jeweils lastkollektivabhängige Schmierparameter eingestellt Nach Abschluss dieses Einlaufbetriebs des tribologischen Systems wird die eingebrachte Grundmenge an Schmiermittel entfernt, das tribologische System bei Bedarf gereinigt sowie vorteilhaft einer Sichtprüfung unterzogen. Durch erneute Befüllung mit einer definierten Menge frischen Schmiermittels wird das tribologische System in den Inbetriebnahmezustand versetzt.

Mit dem Start der Inbetriebnahme des tribologischen Systems erfolgt die Schmierung ausschließlich mit frischem Schmiermittel bis eine vorgegebene Menge an verbrauchtem Schmiermittel in den dafür vorgesehenen Aufnahmebehälter gelangt Ist Die verbrauchte Schmiermittelmenge wird auf der Grundlage der zugeführten Menge an frischem Schmiermittel je Schmierintervall in der Steuereinheit durch Summierung aller absolvierten Schmierintervalle berechnet.

In einer weiteren Ausführungsform wird die Menge an verbrauchtem Schmiermittel durch einen Füllstandsensor im Aufnahmebehälter für verschlissenes Schmiermittel durch die Steuereinheit erfasst.

In einer weiteren vorteilhaften Ausführungsform erfolgt eine Überwachung des durch die Schmierparameter eingestellten Schmierfilms an den Wirkflächen des Systemgliedes In der Art, dass mittels eines Sensors die Wirkflächen kontinuierlich an einer exponierten Stelle geprüft und mit in der Steuereinheit hinterlegten minimalen und/ oder maximalen Schwellwerten verglichen werden. Bei Unterschreitung wird unmittelbar ein Signal zur Auslösung eines zusätzlichen oder zeitlich vorgezogenem Schmierintervalls durch die Steuereinheit ausgegeben, im Gegensatz dazu werden bei zu intensivem Schmiermittelauftrag die Schmierintervalle durch die Steuereinheit verlängert oder/und die jeweils zuzuführende Schmiermittelmenge verringert.

In einer alternativen Ausgestaltung des erfindungsgemäßen Verfahrens erfolgt die Aufnahme des aktuellen Status der Schmierstoffbenetzung der Wirkflächen des tribologischen Systems indirekt durch Soll-Ist-Vergleich erfasster Überwachungsparameter, wie Wirkflächentemperatur und/oder Wirkflächengeräusch und/oder Schwingungsformen und/oder Leistungsdifferenz zwischen Energieeintrag und Energieaustrag des tribologischen Systems. Durch die Steuereinheit wird dabei mindestens einer dieser Überwachungsparameter kontinuierlich erfasst und mit dem durch die zentrale Überwachungseinheit vorgegebenen Maximalwert verglichen, wodurch die eingestellten lastkollektivabhängigen Schmierparameter überprüft und bei Abweichung größer oder kleiner als fünf Prozent geändert werden. Dazu wird unmittelbar ein Signal zur Auslösung eines zusätzlichen oder zeitlich vorgezogenem Schmierintervalls durch die Steuereinheit ausgegeben, im Gegensatz werden bei zu intensivem Schmiermittelauftrag die Schmierintervalle durch die Steuereinheit verlängert und/oder die jeweils zuzuführende Schmiermittelmenge verringert.

In einer weiteren vorteilhaften Ausführungsform befindet sich in unmittelbarer Nähe der Austrittsöffnung am Schmierschnorchelkopf eine mit der Steuereinheit in Verbindung stehende Temperierungseinheit, welche auf der Grundlage der jeweils aktuell ermittelten Überwachungsparameter die Temperatur des zuzuführenden Schmiermittel einstellt.

In einer anderen Ausgestaltungsform des erfindungsgemäßen Verfahrens werden aktuelle Betriebs-, Schmier- und/ oder Überwachungsparameter sowie die Erwartungs-, Vorgabe und/ oder Schwellwerte des tribologischen Systems von der Steuereinheit kontinuierlich an die zentrale Überwachungseinheit übertragen. Auf dieser Grundlage erfolgt durch die zentrale Überwachungselnhelt eine fortdauernde Kontrolle der Grundeinstellung für diese Parameter und/ oder Werte in der Steuereinheit. Bei Abweichungen von mehr als fünf Prozent nimmt die zentrale Überwachungseinheit eine Korrektur der lastkollektivabhängigen Schmierparameter und/oder der eingestellten Soll- und/ oder Schwelllwerte und/oder Erwartungswerte durch Übermittlung geänderter Parametersätze in der Steuereinheit vor.

In Weiterbildung des Verfahrens ist vorgesehen, dass verbrauchter Schmerstoff durch eine Abstreifeinrichtung in einen Aufnahmebehälter oder einen geeigneten Freiraum mit dem Ziel für eine gezielte Aufbereitung und/oder für eine Probeentnahme geleitet wird. Dieser Aufnahmebehälter und/oder der geeignete Freiraum für verbrauchtes Schmiermittel weist in einer vorteilhaften Ausgestaltung eine Einrichtung zum Zuführen von Schmierstoffadditiven und/ oder Schmierstoffkomponenten zur Wiederherstellung der erforderlichen Schmierstoffeigenschaften auf, wobei der Aufbereitungsprozess erst darin gestartet wird, wenn durch die Steuereinheit eine vorgegebene Menge verbrauchten Schmiermittels im Aufnahmebehälter bestimmt wurde.

Danach wird mittels einer Mischeinheit eine gezielte Vermischung des verbrauchten Schmierstoffes mit Schmierstoffadditiven und/ oder Schmierstoffkompouenten in der Art durchgeführt, dass mittels einer Sensorabfrage durch die Steuereinheit die Einfärbung und/oder die Konsistenz des erzeugten Mischgutes prozesabegleitend ermittelt und auf dieser Grundlage die erforderlichen Zugabemengen an Schmiermitteladditiven und/oder Schmiermlttelkomponenten bestimmt werden.

Bei tribologischen Systemen, die über einen Temperaturbereich von größer fünf Kelvin betrieben werden ist es vorteilhaft, die Temperatur des verbrauchten Schmiermittels und des Mischgutes in die Berechnungen zur Bestimmung der Zugabemengen an Schmierstoffadditiven und/ oder Schmierstoffkomponenten einzubeziehenn.

Die Steuereinheit startet den Mischprozess durch Signalausgabe an die Einrichtung zum Zuführen von Schmiermitteladditiven und/oder Schmiermittelkomponentes mit Vorgabe der jeweils ermittelten Mengen. Die Steuereinheit beendet den Mischprozess, wenn mittels Sensorabfrage die erforderlichen Schmierstoffeigenschaften bezüglich Einfärbung und/oder Konsistenz ermittelt wurden.

Dieses aus dem Mischprozess hervorgegangene regenerierte Schmiermittel wird in einer weiteren Ausgestaltung des erfindungsgemäßen Verfahrens über eine Filtereinheit und/ oder Temperierungseinheit der oder den Schmierstellen des tribologischen Systems mit Hilfe einer Pumpe über Dosiereinrichtungen zugeleitet, wobei die Steuereinheit eine Umschaltung von der Betriebsart "Zufuhr von frischem Schmiermittel" in die Betriebsart "Zufuhr von regeneriertem Schmiermittel" vornimmt.

Zusätzlich zu diesen Betriebsarten ist in einer weiteren Ausführungsform eine an einen kurzzeitigen Belastungszustand (beispielsweise hohe Umfangsgeschwindgkeit) angepasste Aufbereitung des verbrauchten Schmiermittels mit entsprechend eingestellten Volumenzusätzen an Schmlermltteladditiven und/ oder Schmiermittelkomponenten vorgesehen, damit dieser kurzzeitige Belastungszustand mit Hilfe angepasster Schmiermitteleigenschaften ohne oder mit minimalen Auswirkungen aut die Lebensdauer des tribologischen Systems umgesetzt werden kann.

In einer alternativen Verfahrensumsetzung ist es möglich, die Konsistenz des Mischgutes durch die Leistungsaufnahme des Antriebes der Mischeinheit unter Einbeziehung der Temperatur des Mischgutes zu bestimmen.

Durch einen Abgleich des In der Steuereinheit hinterlegten Soll- mit dem ermittelten Ist-Zustand des Schmiermittels wird außerdem die zu erwartende Restbetrielbsdauer bis zum Austausch des Schmiermittels bestimmt und ausgegeben. Liegen nach vollzogenem Aufbereitungsprozess Abweichungen der Mischgutparameter von den in der Steuereinheit hinterlegten Soll-Werten größer fünf Prozent vor, ist das Mischgut verschlissen. Daraufhin wird der Aufbereitungsprozess durch die Steuereinheit angehalten und eine Signalausgabe zur Entnahme des verschlissenen Mischgutes vorgenommen. Bis zum Austausch des verschlissenen Mischgutes erfolgt entweder die Schmierung ausschließlich mit frischem Schmiermittel oder das tribologische System wird durch eine Fehlermeldung außer Betrieb gesetzt.

In einer weiteren alternativen Ausgestaltungsform wird durch Entnahme einer Probe verbrauchten Schmiermittels aus dem Aufnahmebehälter für verbrauchtes Schmiermittel in definierten Abständen diese untersucht und auf dieser Grundlage Rückschlüsse auf die Restbetriebsdauer des tribologischen Systems und/ oder des Schmiermittells vorgenommen, Die derart festgestellten Parameter werden an die zentrale Überwachungseinheit übertragen und/ oder durch diese zur Anzeige gebracht sowie für Berechnungen von Parametern und/ oder Werten für weitere tribologische Systeme gespeichert beziehungsweise zur Überprüfung vorhandener Parameter- und/ oder Wertesätze genutzt.

Geht aus der Probenauswertung die Annäherung des Schmiermittelzustandes an einen durch die zentrale Überwachungseinheit vorgegebenen Schwellwert hervor, erfolgt eine Signalausgabe an die Steuereinheit zur Unterbindung des Aufbereitungsprozesses mit der Signalausgabe zur Entnahme des verbrauchten Mischgutes und/ oder Nachfüllung von frischem Schmiermittel und/oder von Schmiermitteladditiven und/ oder Schmiermittelkomponenten.

Eine weitere zweckmäßige Verfahrensausbildung ist **dadurch gekennzeichnet, dass** bei Aufnahme einer verwendungsunspezifischen Verunreinigung des Mischgutes (Maximalwerte der aufgenommenen Oberwachungsparameter liegen über 10 Prozent der vorgegebenen Schwellwerte) durch die Steuereinheit ein Reinigungszyklus gestartet wird, bei welchem entweder eine zeitlich definierte Dauerschmierung mit frischen Schmiermintel und/oder eine zeitlich definierte Dauerschmierung mit Schmierstoffadditiver und/ oder Schmierstoffkomponenten erfolgt und bei Wirkungslosigkeit der eingeleiteten Maßnahmen eine Stillsetzung des tribologischen Systems mit Fehlerausgabe erfolgt.

Die Erfindung wird nachfolgend anhand der Figuren näher erläutert. Es zeigen:
- Fig. 1: ein Ausführungsbeispiel einer Vorrichtung zur Durchführung des erfindungsgemäßen Verfahrens
- Fig. 2: den Ablauf der Informationsgewinnung, -verarbeitung und -ausgabe zwischen einem tribologischen System, einer Steuereinheit und einer zentralen Überwachungseinheit gemäß einer bevorzugten Ausführungsform.

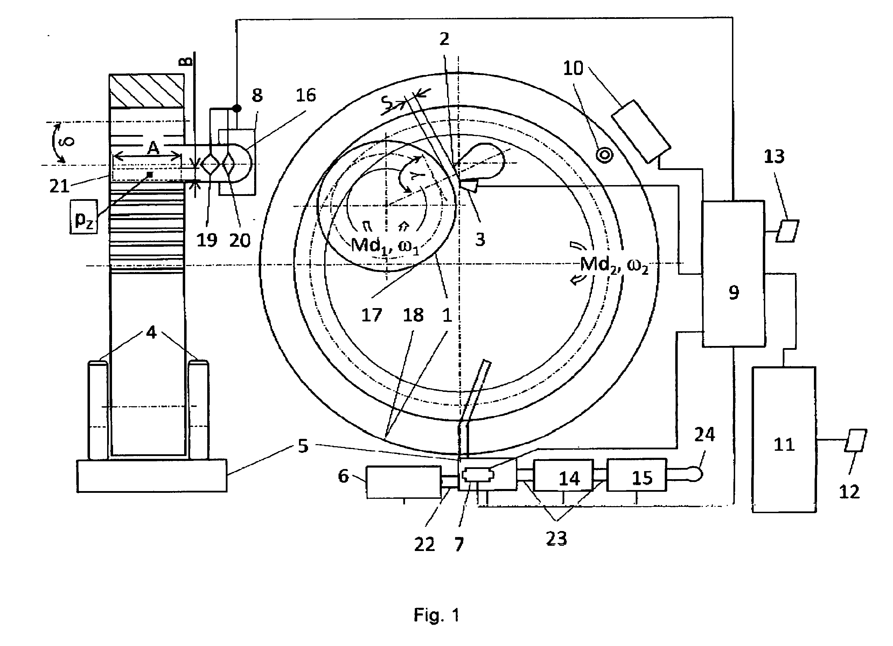

Figur 1 zeigt in zwei Ansichten den Aufbau einer Vorrichtung zur Durchführung des erfindungsgemäßen Verfahrens in einem ersten Ausführungsbeispiel. Das tribologische System (1) besteht aus einem Zahnrad mit Außenverzahnung (17) und einem Zahnrad mit Innenverzahnung (18). Das frische Schmiermittel befindet sich einschließlich einer durch die Steuereinheit (9) ansteuerbaren Pumpeneinheit in einem Vorratsbehälter (8) und wird daraus mit einer Schmierstoffleitung (16) über ein mit der Steuereinheit (9) in Verbindung stehendes Drei-Wege-Ventil (20) und weiter über ein mit der Steuereinheit (9) in Verbindung stehendes elektrisch gesteuertes Ventil (19) zur Austrittsöffnung (21) im Schmierschnorchekopf (2) den Wirkflächen des Zahnrades mit Außenverzahnung (17) zugeführt. Der Schmierschnorchelkopf (2) trägt einen Sensor zur Prüfung der Schmiersroffbenetzung (3), welcher sich am Schmierschnorchelkopf (2) befindet und mit der Steuereinheit (9) in Verbindung steht.

Bei alternativen Ausführungsformen können auch mehrere Sensoren zur Prüfung der Schmierstoffbenetzung angeordnet sein, wenn für das tribologische System (1) keine vorzugsweise Dreh- oder Bewegungsrichtung definiert werden kann.

Im unteren Bereich des tribologischen Systems (1), welcher sich durch Ausnutzung der Schwerkraft in besonderer Weise für das Auffangen des verbrauchten Schmiermittels eignet, ist eine Abstreifeinrichtung für Schmiermittel (4) in der Art angeordnet, dass das derart abgestreifte Schmiermittel aufwandsarm in einen Aufnahmebehälter einschließlich Pumpeneinheit für verbrauchtes Schmiermittel (5) gelangt. Der Aufnahmebehälter einschließlich Pumpeneinheit für verbrauchtes Schmiermittel (5) ist zum Datenaustausch mit der Steuereinheit (9) verbunden. In diesem Aufnahmebehälter einschließlich Pumpeneinheit für verbrauchtes Schmiermittel (5) befindet sich eine mit der Steuereinheit (9) In Verbindung stehende Mischeinheit (7). An diese Mischeinheit (7) ist eine Einrichtung zum Zuführen von Schmiermitteladditiven und/oder Schmiermitteldomponenten (6) mittels einer Schmierstoffleitung (22) angeschlossen, welche ebenfalls mit der Steuereinheit (9) in Verbindung steht. Die Mischeinheit (7) ist weiterhin über eine Schmierleitung (23) mit einer Filtereinheit (14) und diese mittels einer Schmierstoffleitung (23) mit einer Temperierungselnhelt (15) verbunden. Die Filtereinheit (14) und die Temperierungseinheit (15) sind jeweils mit der Steuereinheit (9) zum Datenaustausch verbunden. Die Temperierungseinheit (15) ist über eine Schmterstoffleitung (24) mit einem Drel-Wege-Ventll (20), welches sich Im Schmierschnorchelkopf (2) befindet, verbunden. Das Drei-Wege-Ventil (20) ist außerdem über eine Schmierstoffleitung (16) mit dem Vorratsbehälter einschließlich Pumpeneinheit für frisches Schmiermittel (8) verbunden. Sowohl das Drei-Wege-Ventil (20) als auch der Vorratsbehälter einschließlich Pumpeneinheit für frisches Schmiermittel (8) sind mit der Steuereinheit (9) zum Datenaustausch verbunden. An das Drei-Wege-Ventil (20) ist ein elektrisch gesteuertes Ventil (19) angeschlossen, welches ebenfalls zum Datenaustausch mit der Steuereinheit (9) In Verbindung steht. Das electrisch gesteuerte Ventil (19) ist weiterführend an die Austrittsöffnung im Schmierschnorchelkopf (21) angeschlossen. An die Steuereinheit (9) sind weiterhin zum Datenaustausch eine Einheit zur Aufnahme von Umfangsgeschwindigkeit und Moment sowie Wirkfächentemperatur, Wirkflächengeräusch, Schwingungsformen (10) und eine zentrale Überwachungseinheit (11) angeschlossen. Die Steuereinheit (9) besitzt eine externe Schnittstelle 13). Die zentrale Überwachungseinheit (11) besitzt eine externe Schnittstelle (12).

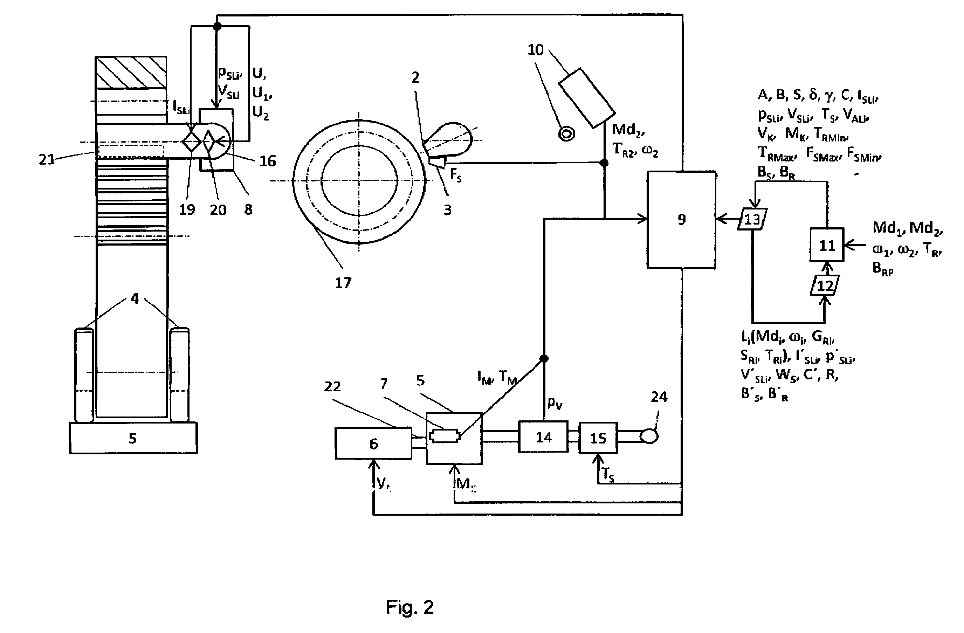

Aus Figur 2 wird in zwei Ansichten die Verfahrensweise eines vorteilhaften erfindungsgemäßen Verfahrens zur belastungsorientierten Schmierung von tribologischen Systemen durch eine wie oben beschriebene Vorrichtung ersichtlich.

In einer erfindungsgemäßen Verfahrensausführung zur belastungsorientierten Schmierung von tribologischen Systemen werden die geometrischen Gegebenheiten eines tribologischen Systems in der Art ermittelt, dass die Abmessungen, die Wirkflächen, die Lagerstellen und die Einbaulage im Gehäuse des Zahnrades mit Außenverzahnung (17) und des Zahnrades mit Innenverzahnung (18) aufgenommen werden. Danach erfolgt die Ermittlung der Betriebsparameter Umfangsgeschwindigkeit (ω₁, ω₂) und das dabei übertragene Moment (Md₁, Md₂) sowie der dabei auftretenden Temperaturen an den Wirkflächen (T_{R}) des Zahnrades mit Außenverzahnung (17). Auf Basis dieser ermittelten Betriebsparameter werden relevante Lastkollektive (Lᵢ(Md₁ᵢ, ω₁ᵢ T_{Ri})) gebildet, weiche wesentliche Kombinationen dieser Betriebsparameter darstellen. Unter Beachtung dieser Gegebenheiten in Verbindung mit den relevanten Lastkollektiven wird das zu schmierende Systemglied (Zahnrad mit Außenverzahnung (17)) des tribologischen Systems (1) testimmt und auf dieser Grundlage die geometrische Gestalt (A, B) der Austrittsöffnung im Schmierschnorchelkopf (21) sowie der Abstand (S) sowie die räumliche Lage (δ, γ) des Schmierschnorchelkopfes (2) in Relation zum Systemglied (17) bestimmt.

Im Anschluss wird die Verteilung der Lastkollektive (L₁) über einer repräsentativen Nutzungszeitraum des tribologischen Systems (1) ermittelt. Daraus erfolg die Bestimmung eines Wertes für das Belastungsäquivalent (C) des tribologischen Systems (1) Dieser Wert für das Belastungsäquivalent (C) dient anschließend zur Ermittlung für einen ausreichenden Vorrat an frischem Schmiermittel sowie der vorzuhaltenden Vorratsmenge an Schmiermitteladditiv, Auf Basis dieser Vorratsmengen werden die Abmessungen für die jeweiligen Vorratsbehältnisse (5, 8) und die Gestalt der Abstreifeinrichtung (4) für außerhalb der Wirkflächen des tribologischen Systems (1) befindlichen Schmiermittels bestimmt.

Im Anschluss erfolgt auf der Grundlage des ermittelten Wertes für das Belastungsäquivalent (C) durch die zentrale Überwachungseinheit (11) die Bereitstellung relevanter Werte für Schmierparameter, Erwartungswerte, Vorgabewerte, Überwchungsparameter und Schwellwerte an die Steuereinheit (9). Zu diesen relevanten Werten zählen beispielsweise:
- lastkollektivabhängige Schmierparameter für Schmiermittelzuführdrock (p_{SLi}), Intervall zur Schmierung des tribologischen Systems (I_{SLi}), zuzuführende Schmiermittelvolumen (V_{SLi}) und Temperatur (T_{S}) des zuzuführenden Schmiermittels,
- betriebsdauerabhängige Erwartungswerte für den Verschleißzustand des Schmiermittels (B_{S}) und der zugehörigen Restbetriebsdauer des tribologischen Systems (B_{R}),
- Vorgabewerte für die jeweils erforderlichen Mengenzuführungen an Schmiemiitteladditiv (V_{A}) sowie für die Konsistenz des verbrauchten Schmiermittels (M_{K}),
- Schwellwerte für die Überwachungsparameter minimale und maximale Schmierfilmdicke für die überwachte Wirkstelle (F_{SMin}, F_{SMax}) sowie für minimale und maximale Wirkflächentemperatur (T_{RMin}, T_{RMax}).

Mit begonnener Inbetriebnahme des tribologischen Systems (1) erfolgt die Schmierung ausschließlich mit frischem Schmiermittel bis ein vorgegebenes Volumen an verbrauchtem Schmiermittel (Vᵥ) in den Aufnahmebehälter gelangt ist. Die Ermittlung dieses Volumens (Vᵥ) an verbrauchtem Schmiermittel wird durch die Steuereinheit (9) in der At bestimmt, dass das Volumen von zugeführtem Schmiermittel (V_{S}) je Intervall zur :Schmierung des tribologischen Systems (I_{S}) über die Anzahl der Schmierintervalle aufsummiert wird.

Die Überwachung des durch die Schmierparameter eingestellten Schmierfilms an den Wirkflächen des Systemgliedes (17) erfolgt In der Art, dass mittels eines Sensors (3) die Wirkflächen kontinuierlich geprüft und mit in der Steuereinheit (9) hintenegten minimalem (F_{SMin}) und maximalem (F_{SMax}) Schwellwert verglichen werden. Bei Unterschreitung des minimalen Schwellwertes (F_{SMin}) wird unmittelbar durch die Steuereinheit (9) ein Signal zur Auslösung eines zusätzlichen oder zeitlich vorgezogenem Schmierintervalls (I_{S}) ausgegeben oder/und das jeweils zuzuführende Schmiermittelvolumen (V_{S}) erhöht. Irr Gegensatz dazu werden bei zu Intensivem Schmiermittelauftrag die Schmierintervalle (I_{S}) durch die Steuereinheit (9) verlängert und/oder das jeweils zuzuführende Schmierraittelvolumen (V_{S}) verringert.

Neben der direkten Überwachung der Schmierfilmdicke (F_{S}) an der expenierten Wirkstelle durch einen Sensor (3) erfolgt eine zusätzliche Kontrolle der tribologiselhen Systems (1) durch die Steuereinheit (9). Dabei überwacht die Steuereinheit (9) durch Soll-Ist-Vergleich der durch die Einheit zur Aufnahme von Umfangsgeschwindigkeit, Moment und Wirkflächentemperatur (10) erfassten Überwachungsparameter Wirkflächentemperatur (T_{R2}), Umfangsgeschwindigkeit (ω₂) und Moment (Md₂) indirekt den aktuellen Zustand des tribologischen Systems (1). Dadurch erfolgt eine zusätzliche Kontrolle der durch den Sensor zur Prüfung der Schmierstoffbenetzung (3) gelieferten Daten (F_{S}), wodurch eine Fehlfunktion einer der beiden Sensoren (3, 10) auf der Grundlage einer Plausibilitätsprüfung in der Steuereinheit (9) festgestellt wird. Bei festgestellter Abweichung größer oder kleiner als fünf Prozent erfolgt eine Fehlerausgabe durch die Steuereinheit (9). Zusätzlich erfolgt bei Überschreitung des maximalen Schwellwertes (T_{RMax}) unmittelbar durch die Steuereinheit (9) ein Signal zur Auslösung eines zusätzlichen oder zeitlich vorgezogenem Schmierintervalls (I_{S}) oder/und das jeweils zuzuführende Schmiermittelvolumen (V_{S}) wird erhöht. Im Gegensatz dazu werden bei Unterschreitung des minimalen Schwellwertes (T_{Rmin}) die Schmierintervalle (I_{S}) durch die Steuereinheit (9) verlängert und/der das jeweils zuzuführende Schmiermittelvolumen (V_{S}) verringert. Bei Unwirksamkeit dieser Maßnahmen durch fortdauernde Abweichung von den Schwellwerten (T_{Rmax}, T_{Rmin}) größer fünf Prozent erfolgt eine Stillsetzung des tribologischen Systems (1) mit Ausgabe einer Fehlermeldung der Steuereinheit (9) über deren externe Schnittstelle (13).

Über die externen Schnittstellen (13, 12) werden von der Steuereinheit (9) an die zentrale Überwachungseinheit (11) die aktuellen Betriebs-, Schmier- und Überwachungsparameter sowie die Erwartungswerte des tribologischen Systems (1) kontinuierlich übertragen Auf dieser Grundlage erfolgt durch die zentrale Überwachungseinheit (11) eine fortdauernde Kontrolle der Grundeinstellung für lastkollektivabhängige Schmienoarameter sowie zugehöriger betriebsdauerabhängiger Soll-Werte für Verschleißzustand des Schmiermittels und Restbetriebsdauer des tribologischen Systems (1) in der Steuereinheit (9). Dazu führt die zentrale Überwachungseinheit (11) eine betriebsstundengetragene Abfrage des vorgegebenen Belastungsäquivalentes (C) unter Berücksichtigung der jeweils aktuellen Betriebs- und/oder Überwachungs- und/oder Schmierparametersätze der Steuereinheit (9) durch Bei Abweichungen von mehr als fünf Prozent nimmt die zentrale Überwachungseinheit (11) eine Korrektur der lastkollektivabhängigen Schmierparameter und bei Notwendigkeit der eingestellten Schwellwerte und Erwartungswerte durch Übermittlung geänderter Parametersätze in der Steuereinheit (9) vor.

Der verbrauchte Schmierstoff wird von den Systemgliedern (17, 18) durch eine Abstreifeinrichtung (4) unter Ausnutzung der Schwerkraft in einen Aufnahmebehälter (5) geleitet. Dieser Aufnahmebehälter (5) weist eine Einrichtung zum Zuführen von Schmierstoffadditiven (6) zur Wiederherstellung der erforderlichen Schmierstoffeigenschaften auf, wobei der Aufbereitungsprozess erst dann gestartet wird, wenn durch die Steuereinheit (9) eine vorgegebene Menge verbrauchten Schmiermittels im Aufnahmebehälter (5) bestimmt wurde. Danach wird mittels einer Mischeinheit (7) eine gezielte Vermischung des verbrauchten Schmierstoffes mit den Schmierstoffadditiven in der Art durchgeführt, dass die Konsistenz des Mischgutes durch die Leistungsaufnahme des Antriebes der Mischeinheit (7) unter Einbeziehung der Temperatur des Mischgutes T_{M} prozessbegleitend bestimmt wird. Auf dieser Grundlage wird die maximal erforderliche Zugabemenge an Schmiermitteladditiv durch die Steuereinheit (9) ermittelt. Anschließend startet die Steuereinheit (9) durch Signalausgabe an die Einrichtung zum Zuführen von Schmiermitteladditiven (6) mit Überwachung der jeweils zugefühten Menge an Schmiermitteladditiv den Mischprozess, welcher erst nach Feststellung der ermittelten Menge an Schmierstoffadditiv beendet wird. Eine Überprüfung des in dieser Art regenerierten Schmiermittels erfolgt durch Leistungsaufnahme des Antriebes der Mischeinheit (7) unter Einbeziehung der Temperatur des Mischgutes T_{M}. wobei bei einer Abweichung der Leistungsaufnahme des Antriebes der Mischeinheit (7) von mehr als fünf Prozent der Aufbereitungsprozess durch die Steuereinheit (9) erneut ausgelöst oder eine Fehlermeldung mit Einstellung der Schmierung durch das regenerierte Schmiermittel durch Signalausgabe an das Drei-Wege-Ventil (20) erfolgt.

Dieses regenerierte Schmlermittel wird über eine Filtereinheit (14) und Temperierungseinheit (15) der Schmierstelle des tribologischen Systems (1) mit Hilfe einer in der Mischeinheit (7) integrierten Pumpe über Schmierleitungen (23, 24) dem Drei-Wege-Venili (20) und weiter dem elektrisch gesteuerten Ventil (19) der Austrittsöffnung im Schmierschnorchelkopf (21) zugeleitet, wobei die Steuereinheit (9) eine Umschaltung des Drei-WegeVentils (20) von der Betriebsart "Zufuhr von frischem Schmiermittel" in die Betriebsart "Zufuhr von regeneriertem Schmiermittel", vornimmt. Die belastungsorientierte Einstellung der Schmierparameter erfolgt durch die Steuereinheit (9) mit Hilfe des elektrisch steuerbaren Ventils (19)

Durch einen Abgleich des in der Steuereinheit (9) hinterlegten Soll- mit dem ermittelten Ist-Zustand des Schmiermittels wird außerdem die zu erwartende Restbetrisbadauer bis zum Austausch des Schmiermittels (B_{S}) bestimmt und mit Hilfe der externen Schnittstelle (13) ausgegeben. Liegen nach vollzogenem Aufbereitungsprozess Abweichungen der Mischgutparameter von den in der Steuereinheit (9) hinterlegten Soll-Werten größer fünf Prozent vor, ist das Mischgut verschlissen. Daraufhin wird der Aubereitungsprozess durch die Steuereinheit (9) angehalten und eine Signalausgabe zur Entnahme des verschlissenen Mischgutes über die externe Schnittstelle (13) vorgenommen. Bis zum Austausch des verschlissenen Mischgutes erfolgt entweder die Schmierung ausschließlich mit frischem Schmiermittel oder das tribologische System (1) wird durch eine Fehlermeldung der Steuereinheit (9) außer Betrieb gesetzt.

Eine nicht venuendungsspezifische Verunreinigung des Mischgutes wird durch die Steuereinheit (9) festgestellt, wenn die Maximalwerte der Überwachungsparameter um mehr als 10 Prozent überschritten sind; Daraufhin startet die Steuereinheit (9) einen Reinigungszyklus, bei welchem entweder eine zeitlich definierte Dauerschmierung mit frischem Schmiermittel oder eine zeitlich definierte Dauerschmierung mit Schmierstoffadditiven erfolgt. Bei Wirkungslosigkeit der eingeleiteten Maßnahmen erfolgt durch die Steuereinheit (9) eine Stillsetzung des tribologischen Systems (1) mit Fehlerausgabe über die externe Schnittstelle (13).

### Bezugszeichenliste

- 1: Tribologisches System
- 2: Schmierschnorchelkopf
- 3: Sensor zur Prüfung der Schmierstoffbenetzung
- 4: Abstreifeinrichtung für Schmiermittel
- 5: Aufnahmebehälter einschließlich Pumpeneinheit für verbrauchtes Schmiermittel
- 6: Einrichtung zum Zuführen von Schmiermieladditiven und/oder Schmiermittelkomponenten
- 7: Mischeinheit
- 8: Vorratsbehälter einschließlich Pumpeneinheit für frisches Schmiemittel
- 9: Steuereinheit
- 10: Einheit zur Aufnahme von Umfangsgeschwindigkeit und Moment sowie Wirkftächentemperatur, Wirkflächengeräusch, Schwingungsformen
- 11: Zentrale Überwachungseinheit
- 12: Externe Schnittstelle der zentralen Überwachungseinheit
- 13: Externe Schnittstelle der Steuereinheit
- 14: Filtereinheit
- 15: Temperierungseinheit
- 16: Schmierstoffleitung zwischen 8 und 20
- 17: Zahnrad mit Außenverzahnung
- 18: Zahnrad mit Innenverzahnung
- 19: Elektrisch gesteuertes Ventil
- 20: Drei-Wege-Ventil
- 21: Austrittsöffnung im Schmierschnorchelkopf
- 22: Schmierstoffleitung zwischen 7 und 14 sowie 14 und 15
- 23: Schmierstoffleitung zwischen 15 und 20
- 24: Schmierstoffleitung zwischen 8 und 20
- A: Länge der Austrittsöffnung am Schmierschnorchelkopf
- B: Breite der Austrittsöffnung am Schmierschnorchelkopf
- S: Abstand Schmierschnorchelkopf zur exponierten Schmierstelle
- γ: Winkel zwischen Tangente der exponierten Schmierstelle und der radialen Mittellinie der Austrittsöffnung am Schmierschnorchelkopf
- δ: Winkel zwischen Zahnflanke der exponierten Schmierstelle und der axialen Mittellinie der Austrittsöffnung am Schmierschnorchelkopf
- Md₁: Moment an der exponierten Schmierstelle
- Md₂: Moment des Wirkpartners der exponierten Schmierstelle
- ω₁: Umfangsgeschwindigkeit an der exponierten Schmierstelle
- ω₂: Umfangsgeschwindigkeit des Wirkpartners der exponierten Schmierstelle
- L: Lastkollektiv
- C: Belastungsäquivalent
- p_{Z}: Schmiermitteldruck am Schmierschnorchelkopf
- p_{S}: Schmiermittelzuführungsdruck
- p_{SLI}: Lastkollektivabhängiger Schmiemittelzuführungsdruck
- p_{V}: Druckdifferenzwert der Filtereinheit
- i: Laufvariable
- T_{R}: Wirkflächentemperatur
- T_{R2}: Durch (10) aufgenommene Wirkflächentemperatur
- T_{RMin}: Schwellwert für minimale Wirkflächentemperatur
- T_{RMax}: Schwellwert für maximale Wirkflächentemperatur
- T_{S}: Einzustellende Temperatur des zuzuführenden Schmiermittels
- T_{M}: Temperatur des Mischgutes
- F_{S}: Dicke des Schmiermittelfilms an der exponierten Schmierstelle
- F_{SMin}: Schwellwert für minimale Schmierfilmdicke an der exponierten Schmierstelle
- F_{SMax}: Schwellwert für maximale Schmierfilmdicke an der exponierten Schmierstelle
- I_{M}: Stromaufnahme des Antriebs der Mischeinheit
- I_{S}: Intervall zur Schmierung des tribologischen Systems
- I_{SLi}: Lastkollektivabhängiges Intervall zur Schmierung des tribologischen Systems
- W_{S}: Signal zum Schmierstoffwechsel
- R: Fehlermeldung mit Abschaltung des tribologischen Systems
- B_{R}: Erwartungswert für Restbetriebsdauer des tribologischen Systems
- B_{S}: Erwartungswert Restbetriebsdauer des Schmiermittels
- B_{RP}: durch Probenauswertung ermittelte Restbetriebsdauer des tribologischen Systems mit Schmiermittelaufbereitung
- V_{S}: Zuzuführendes Schmiermittelvolumen
- V_{V}: Vorgabewert für aufgenommenes Volumen an verbrauchtem Schmiermittel
- V_{A}: Vorgabewert für zuzuführendes Volumen an Schmiermittelacditiv
- V_{SLI}: Lastkollektivabhängiges zuzuführendes Schmiermittelvolumen
- U: Signal für Reinigungszyklus
- U₁: Signal für Dauerschmierung mit frischen Schmiermittel
- U₂: Signal für Dauerschmierung mit Schmierstoffadditiven und/ oder Schmierstoffkomponenten
- M_{K}: Vorgabewert für Konsistenz des verbrauchten Schmiermittels

## Patentansprüche

1. Verfahren zur belastungsorientierben Schmierung von tribologischen Systemen (1) mit einem Schmiermittel **dadurch gekennzeichnet, dass** die geometrischen Gegebenheiten wie Abmessungen, Lage, Form, Einbaulage, Abmessungen der Wirkflächen oder vergleichbare Merkmale der Systemglieder (17, 18) des tribologischen Systems (1) ermittelt werden, die Betriebsparameter Geschwindigkeit, Temperatur (T_{R}) und das dabei übertragene Moment (Md₁) und/oder Beschleunigungen, Geschwindigkeits- und Momentbereiche, Wirkrichtungen und Flächenpressungen aufgenommen und daraus Lastkollektive (L) gebildet werden, die Verteilung dieser Lastkollektive (L) über einen repräsentativen Zeitraum emittelt werden und daraus ein Belastungsäquivalent (C) des tribologischen Systems (1) bestimmt wird, aus diesem Belastungsäquivalent (C) die jeweils zugehörige erforderliche Vorratsschmiermittelmenge und/oder die Vorratsmengen für die Schmiemitteladditive und/ oder Schmiermittelkomponenten bestimmt sowie die sich daraus ergebenden Abmessungen für die jeweiligen Vorratsbehältnisse (5, 8) und die Abstreifeinrichtung (4 für Schmiermittel ermittelt werden, aus den geometrischen Gegebenheiten und den gebildenen Lastkollektiven (L) die geometrische Gestalt entsprechend der Länge (A) und Breite (B) der Austrittsöffnung am Schmierschnorchelkopf (2), der Abstand (S) von der Austrittsöffnung im Schmierschnorchelkopf (2) bis zur exponierten Schmierstelle sowie der Winkel (γ) zwischen Tangente der exponierten Schmierstelle und der radialen Mittellinie der Austrittsöffnung am Schmierschnorchelkopf (2) und der Winkel (δ) zwischen Zahnflanke der exponierten Schmierstelle und der axialen Mittellinie der Austrittsöffnung am Schmierschnorchelkopf (2) sowie das zu schmierende Systemglied bestimmt werden, die lastkollektivabhängigen Schmierparameter für Schmiermittelzuführdruck (p_{S}), Intervall zur Schmierung des tribologischen Systems (I_{S}), zuzuführendes Schmiermittelvolumen (V_{S}) und/ oder Temperatur des Schmiermittels ermittelt werden.

2. Verfahren nach Anspruch 1 **dadurch gekennzeichnet, dass** auf der Grundlage des ermittelten Belastungsäquivalent (C) ein Einlaufbetrieb bestimmt und nach Abschluss dieses möglichen Einlaufbetriebs des tribologischen Systems (1) die eingebrache Grundmenge an Schmlermittel entfernt und anschließend mit einer definierten Menge an frischem Schmiermittel befüllt wird.

3. Verfahren nach Anspruch 1 **dadurch gekennzeichnet, dass** mittels eines Sensors (3) die Wirkflächen an einer exponierten Stelle auf ausreichende Schmierstoffbenetzung (F_{S}) geprüft werden und bei Unterschreitung und/ oder Überschreitung soort ein Signal zur Veränderung der Schmierparameter (p_{SLI}, I_{SLI}, V_{SU}) durch eine Steuereinheit (9) ausgegeben wird.

4. Verfahren nach Anspruch 1 **dadurch gekennzeichnet, dass** verbrauchter Schmierstoff durch eine Abstreifeinrichtung (4) in einen Aufnahmebehälter (5) oder einen geeigneten Freiraum geleitet wird.

5. Verfahren nach einem der Ansprüche 1 oder 4 **dadurch gekennzeichnet, dass** der Aufnahmebehälter (5) und/oder der geeignete Freiraum eine Einrichtung zum Zuführen von Schmlerstoffadditiven und/ oder Schmierstoffkomponenten (6) zur Wiederherstellung der erforderlichen Schmierstoffeigenschaften aufweist und mittels einer Mischeinheit (7) eine gezielte Vermischung des verbrauchten Schmierstoffes mit den Schmienstoffadditiven und/ oder Schmierstoffkomponenten in der Art erfolgt, dass die Einfärbung und/oder die Konsistenz und/ oder die Temperatur des erzeugten Mischgutes ermittelt werden und der Mischprozess erst nach Feststellung der erforderlichen Schmierstoffeigenschaften beendet und über eine Filtereinheit (14) und/ oder Temperierungseinheit (15) der Schmierstelle zugeleitet wird.

6. Verfahren nach Anspruch 5 **dadurch gekennzeichnet, dass** die Konsistenz des Mischgutes durch die Leistungsaufnahme des Antriebes der Mischeinheit (I_{M}) und /oder in Verbindung mit einer Temperaturaufnahme des Mischgutes (T_{M}) bestimmt wird.

7. Verfahren nach Anspruch 1 **dadurch gekennzeichnet, dass** zur Aufnahme des aktuellen Status der Schmierstoffbenetzung des tribologischen Systems (1) eine Sensorabfrage der Wirkflächentemperatur (T_{R}) und/oder des Wirktlächengeräuschas und/oder der Schwingungsformen und/oder der Leistungsdifferenz zwischen Energieeintrag und Energieaustrag des tribologischen Systems (1) durch eine Steuereinheit (9) kontinuierlich durchgeführt wird, wodurch die eingestellten laskollektivabhängigen Schmierparameter (p_{SLi}, I_{SLi}, V_{SLi}) überprüft und bei Bedarf neu eingestellt werden.

8. Verfahren nach Anspruch 6 **dadurch gekennzeichnet, dass** bei verschlissenem Mischgut der Aufbereitungsprozess durch eine Steuereinheit (9) angehalten und eine Signalausgabe zum Schmierstoffwechsel (W_{S}) erfolgt und bis zum Austausch des verschlissenen Mischgutes die Schmierung mit frischem Schmiermittel erfolgt oder das tribologische System (1) durch eine Fehlermeldung (R) außer Betrieb gesetzt wird.

9. Verfahren nach Anspruch 1 **dadurch gekennzeichnet, dass** durch einen Abgleich des Soll- mit dem Ist-Zustand der Mischgutparameter des Schmiermittels durch eine Steuereinheit (9) die zu erwartende Restbetriebsdauer bis zum Austausch des Schmiermittels (B_{S}) bestimmt und ausgegeben wird.

10. Verfahren nach Anspruch 1 **dadurch gekennzeichnet, dass** eine Probe verbrauchten Schmiermittels in definierten Abständen entnommen und untersucht wird, woraus eine Restbetriebsdauer (B_{RP}) des tribologischen Systems (1) und/ oder des Schmiermittels (B_{S}) ermittelt und in eine zentrale Überwachungseinheit (11) übertragen und/ oder durch diese zur Anzeige gebracht sowie für Berechnungen zu erwartender Restbetriebsdauern (B_{R}) anderer tribologischer Systeme (1) gespeichert wird.

11. Verfahren nach Anspruch 1 **dadurch gekennzeichnet, dass** die ermittelten Betriebsparameter des tribologischen Systems (1) von einer Steuereinheit (9) an eine zentrale Überwachungseinheit (11) übertragen werden, welche eine kontinuierliche Kontrolle der Grundeinstellung für die lastkollektivabhängigen Schmierparameter (p_{SLi}, I_{SLi}, V_{SLI}) durchführt und bei Abweichungen von mehr als fünf Prozent diese lastkellektivabhängigen Schmierparameter (p_{SLi}, I_{SLi}, Vsu) an die ermittelten Gegebenheiten durch eine Parameteränderung in der Steuereinheit (9) anpasst.

12. Verfahren nach Anspruch 1 **dadurch gekennzeichnet, dass** die Betriebsparameter des tribologischen Systems (1) in der zentralen Überwachungseinheit (11) auf der Grundlage des jeweiligen Belastungsäquivalentes (C) verdichtet und aus diesen Parametern jeweils ein Wert für die zu erwartende Restbetriebsdauer des Schmiermittels (B_{S}) sowie des tribologischen Systems (1) (B_{R}) bestimmt und weiterführend mit den äquivalenten Soll-Werten einer Steuereinheit (9) abgeglichen werden und bei Abweichungen größer fünf Prozent eine Modifikation in der Soll-Wertbereitstellung der Steuereinheit (9) erfolgt.

13. Verfahren nach Anspruch 5 **dadurch gekennzeichnet, dass** bei Aufnahme einer verwendungsunspefischen Verunreinigung des Mischgutes durch eine Steuereinheit (9) ein Reinigungszyklus (U) gestartet wird, bei welchem entweder eine zeitlich definierte Dauerschmierung mit frischen Schmiermittel und/oder eine zeitlich definierte Dauerschmierung mit Schmierstoffadditiven und/ oder Schmierstoffkomponenten erfolgt und bei Wirkungslosigkeit dieser Maßnahmen eine Stillsetzung des tribologischen Systems mit Störungsanzeige (R) durch die Steuereinheit (9) vorgenommen wird.

14. Verfahren nach Anspruch 1 **dadurch gekennzeichnet, dass** die Temperatur der Wirkflächen (T_{R}) des tribologischen Systems (1) ermittelt wird und eine Steuereinheit (9) mit Hilfe einer Temperierungseinheit (15) die geeignete Temperatur für das zuzuführende Schmiermittel (T_{S}) einstellt.

15. Verfahren nach Anspruch 5 **dadurch gekennzeichnet, dass** eine Steuerungseinheit (9) eine Betriebsart für kurzzeitige Überlast des tribologischen Systems 1) bereitstellt, bei welcher neben Einstellung spezieller Schmierparameter (p_{SLI}, I_{SLI}, V_{SLI}) auch die Zusammensetzung des Mischgutes an den Belastungsfall angepasst wurde.
